# EUROPÄISCHE PATENTSCHRIFT

(11) **EP 2 223 516 B1**
(45) Veröffentlichungstag und Bekanntmachung des Hinweises auf die Patenterteilung: **27.05.2015**
(21) Anmeldenummer: 08857696.2
(22) Anmeldetag: 27.10.2008
(51) Int. Cl.: H04M 1/725

(54) **VERFAHREN ZUM BETREIBEN VON EINER SCHNURLOSEN MOBILEN FUNKEINRICHTUNG UND EINER ANGESCHLOSSENEN SCHNURLOSEN STATIONÄREN FUNKEINRICHTUNG**
METHOD FOR OPERATING A WIRELESS MOBILE RADIO DEVICE AND A WIRELESS STATIONARY RADIO DEVICE CONNECTED THERETO
PROCÉDÉ POUR FAIRE FONCTIONNER UN DISPOSITIF DE RADIOTÉLÉPHONIE MOBILE SANS FIL ET UN DISPOSITIF DE RADIOTÉLÉPHONIE STATIONNAIRE SANS FIL CONNECTÉ

(30) Priorität: 03.12.2007 DE 102007057986
(43) Veröffentlichungstag der Anmeldung: 01.09.2010
(73) Patentinhaber: Gigaset Communications GmbH, 81379 München (DE)
(72) Erfinder: KEHREN, Dieter, 46539 Dinslaken (DE); LOONEN, Hans-Jürgen, 46419 Isselburg (DE); MÜLLER, Andreas, 46459 Rees (DE); SCHOLZ, Peter, 46395 Bocholt (DE); TÖBBEN, Wilfried, 49624 Löningen (DE)
(74) Vertreter: Michalski Hüttermann & Partner Patentanwälte mbB
(86) Internationale Anmeldenummer: PCT/EP2008/064503
(87) Internationale Veröffentlichungsnummer: WO 2009/071391

(56) Entgegenhaltungen:
- EP-A- 0 855 822
- EP-A- 1 028 575
- EP-A- 1 231 799
- EP-A- 1 686 815
- DE-A1- 19 728 696
- GB-A- 2 314 736
- SIEMENS: "GIGASET 4170-4175 ISDN OPERATING INSTRUCTIONS" INTERNET CITATION, [Online] XP002381412 Gefunden im Internet: URL:http://www.andersonautomatisering.nl/d ownload/Gigaset_4175.pdf> [gefunden am 2006-05-17]
- "Digital Enhanced Cordless Telecommunications (DECT); Generic Access Profile (GAP); Final draft ETSI EN 300 444", ETSI STANDARD, EUROPEAN TELECOMMUNICATIONS STANDARDS INSTITUTE (ETSI), SOPHIA ANTIPOLIS CEDEX, FRANCE, vol. RES-3;DECT, no. V2.1.0, 1 June 2008 (2008-06-01), XP014041881,

## Beschreibung

Die Erfindung betrifft ein Verfahren zum Betreiben von zumindest einer gemäß einem Schnurlostelekommunikationsstandardfunktionierenden mobilen Funksende-/Funkempfangseinrichtung an einer gemäß dem Schnurlostelekommunikationsstandard funktionierenden stationären Funksende-/Funkempfangseinrichtung gemäß dem Oberbegriff des Anspruchs 1 sowie eine stationäre Funksende-/Funkempfangseinrichtung gemäß dem Oberbegriff des Anspruchs 11 und mobile Funksende-/Funkempfangseinrichtung gemäß dem Oberbegriff des Anspruchs 14.

Bei einem gegenwärtigen Schnurloskommunikationsystem, dem sogenannten Digital European Cordless Telefony Standard (DECT), ist es obligatorisch vorgeschrieben, dass gemäß DECT funktionierende Mobilteile mittels einer gemäß dem Standard vorgeschriebenen sogenannten Generic Access Profile (GAP) Prozedur an einer Basis angemeldet werden. Dies ermöglicht, dass das Anmelden auch herstellerübergreifend funktioniert.

Die "Gigaset 4170-4175 ISDN Operating Instructions" beschreiben u.a. die Anmeldung von Mobilteilen an die Gigaset-Basisstationen 4170 bzw. 4175isdn. Dabei wird die Anmeldung von mobilen Teilen der Gigaset-Produktreihe sowie die Anmeldung von GAP-Mobilteilen anderer Hersteller jeweils separat beschrieben. Die britische Patentanmeldung GB 2314736 A beschreibt eine Methode zur Identifizierung aktiver Handsets in einem Schnurlostelefonsystem. Die europäische Patentanmeldung EP 855822A beschreibt ein Telefonsystem zum Zugriff auf ein in einer tragbaren Hauptsprechstelle gespeichertes Teilnehmerverzeichnis für eine Vielzahl von tragbaren Nebenfernsprechstellen. Die deutsche Patentanmeldung DE 19728696 Al beschreibt eine Schnurlostelefonanlage, bei der von einem Mobilteil aus auf den Nummernspeicher einer Feststation zugegriffen werden kann. Die europäische Patentanmeldung EP 1028575 A beschreibt ein Telekommunikationssystem zur virtuellen Speichererweiterung in einem Teilnehmerendgerät und ein zugehöriges Verfahren. Dabei besitzt ein Teilnehmerendgerät eine Leseeinheit zum dezentralen Lesen von Telefoneinträgen in Speichereinheiten anderer Teilnehmerendgeräte. Die europäische Patentanmeldung EP 1686815 A beschreibt die Anmeldung sowie Abmeldung eines schnurlosen Endgerätes in einem schnurlosen Telefonsystem. Die europäische Patentanmeldung EP 1231799 A beschreibt ein Verfahren und eine Vorrichtung zum erstmaligen Einbuchen eines DECT/GAP-Handsets oder eines -Systemterminals in eine DECT-Telekommunikationsanlage. Ferner beschreibt das Generic Access Profile (GAP) des European Telecommunication Standards Institute (ETSI), auch GAP-Standard genannt, in der europäischen Norm (EN) ETSI EN 300 444 in der Ausgabe V2.1.0 vom Juni 2008 die Möglichkeit der Übermittlung von Terminaleigenschaften an eine Feststation.

Für das von einem Mobilteil initiierte Abmelden anderer Mobilteile ist keine Lösung standardisiert.

Die der Erfindung zugrunde liegende Aufgabe ist es, ein Verfahren und eine Anordnung anzugeben, welche ein Abmelden ermöglichen.

Diese Aufgabe wird ausgehend von dem Verfahren gemäß dem Oberbegriff des Anspruchs 1 durch die kennzeichnenden Merkmale gelöst. Ferner wird dies durch die Merkmale der stationären Funksende-/Funkempfangseinrichtung gemäß Anspruch 11 und stationären Funksende-/Funkempfangseinrichtung gemäß Anspruch 12 gelöst. Vorteilhafte Weiterbildungen der Erfindung sind in den Unteransprüchen angegeben.

Bei dem erfindungsgemäßen Verfahren zum Betreiben von zumindest einer gemäß einem Schnurlostelekommunikationsstandard, insbesondere einem DECT Derivat, funktionierenden mobilen Funksende-/Funkempfangseinrichtung an einer gemäß dem Schnurlostelekommunikationsstandard funktionierenden stationären Funksende-/Funkempfangseinrichtung, bei dem seitens zumindest einer der Funksende-/Funkempfangseinrichtungen, insbesondere der Stationären, zumindest eine Liste gespeichert wird, wird seitens der mobilen Fundsende-/Funkempfangseinrichtung zumindest eine die Liste betreffende Protokollnachricht derart gebildet und an die stationäre Funksende-/Funkempfangseinrichtung übertragen, dass die mobile Funksende-/Funkempfangseinrichtung zumindest Teile der Liste betreffende Zugriffe durch die stationäre Funksende-/Funkempfangseinrichtung manipuliert.

Hierdurch kann herstellerübergreifend seitens der angemeldeten Mobilteile verschiedenster Hersteller ein Abmelden initiiert werden, wobei im Wesentlichen keine Anpassung bereits bekannter Systeme erfolgen muss. Die Erfindung kann also leicht in bestehende, aber auch in zukünftige Schnurlossysteme implementiert werden kann.

Bei einer vorteilhaften Weiterbildung wird die Protokollnachricht derart gebildet, dass seitens der stationären Funksende-/Funkempfangseinrichtung nur Elemente der Liste ausgelesen und an die mobile Funksende-/Funkempfangseinrichtung übertragen werden, die seitens der mobilen Funksende-/Funkempfangseinrichtung verarbeitbar sind.

Hierdurch wird eine, insbesondere erleichterte, Adaption der von Mobilteilen an Basisstationen erreicht bzw. der Vorteil der Unterstützung von Mobilteilen, die von Herstellern stammen, die sich vom Hersteller der Basisstation unterscheiden und somit auch durch proprietäre Dienst- und Leistungsmerkmale zur Basisstation unterschiedlich sein können.

Bei einer weiteren Fortbildung der Erfindung werden einer Ermittlung der Verarbeitbarkeit der Darstellungsmöglichkeiten der mobilen Funksende-/Funkempfangseinrichtung, insbesondere Eigenschaften des Displays, zugrunde gelegt.

Dies ermöglicht eine weitere Verbesserung der angesprochenen Adaption.

Alternativ oder ergänzend werden mit dem gleichen Vorteil einer Ermittlung der Verarbeitbarkeit die der mobilen Funksende-/Funkempfangseinrichtung verfügbaren Ressourcen zugrunde gelegt.

Bei einer Weiterbildung
a) führt die stationäre Funksende-/Funkempfangseinrichtung bei ihr angemeldete mobile Funkesende-/Funkempfangseinrichtungen als Elemente einer Liste,
b) wird durch die mobile Funksende-/Funkempfangseinrichtung die Protokollnachricht derart gebildet, dass
   b1) die mobile Funksende-/Funkempfangseinrichtung zumindest eine der angemeldeten mobilen Funksende-/Funkempfangseinrichtungen spezifiziert, deren Eintrag aus der Liste gelöscht werden soll,
   b2) die stationäre Funksende-/Funkempfangseinrichtung bei Empfang der Protokollnachricht das jeweilige Eintrag löscht und für die zugehörige mobile Funksende-/Funkempfangseinrichtung eine Abmeldeprozedur startet.

Alternativ oder ergänzend führt
a) die stationäre Funksende-/Funkempfangseinrichtung bei ihr angemeldete mobile Funkesende-/Funkempfangseinrichtungen als Elemente einer Liste,
b) wird durch die mobile Funksende-/Funkempfangseinrichtung die Protokollnachricht derart gebildet, dass
   b1) die mobile Funksende-/Funkempfangseinrichtung zumindest eine nicht angemeldete mobilen Funksende-/Funkempfangseinrichtungen spezifiziert, deren Element in die Liste eingetragen werden soll,
   b2) die stationäre Funksende-/Funkempfangseinrichtung bei Empfang der Protokollnachricht das jeweilige Element einträgt und für die zugehörige mobile Funksende-/Funkempfangseinrichtung eine Anmeldeprozedur startet.

Bei einer weiteren Weiterbildung der Erfindung werden die Protokollnachrichten derart gebildet, dass sie einem Protokoll folgen, welche eine Trennung von Objekten und Aktionen vorsieht.

Ferner werden alternativ oder ergänzend die Protokollnachrichten derart gebildet, dass sie einem Protokoll folgen, welches derart strukturiert wird, dass die stationäre Funksende-/Funkempfangseinrichtung der mobilen Funksende-/Funkempfangseinrichtung eine auf der mobilen Funksende-/Funkempfangseinrichtung darzustellende durch die stationäre Funksende-/Funkempfangseinrichtung unterstützte Menüstruktur übermittelt.

Vorzugsweise wird dabei das Protokoll generisch strukturiert.

Dies kann derart vorteilhaft Weitergebildet werden, dass das Protokoll derart generisch strukturiert wird, dass die Menüstruktur als eine Liste hinterlegt und/oder behandelt wird.

Bei einer weiteren Weiterbildung ist auf vorteilhafte Weise die Liste derart ausgestaltet, dass als Elemente Konfigurationsparameter derart organisiert gespeichert sind, dass sie zumindest als einen ersten Eintrag eine, insbesondere unveränderbare, Parameterkennzeichnung und als einen zweiten Eintrag einen manipulierbaren Wert des Parameters enthalten.

Die genannten Vorteile ergeben sich ferner durch eine Stationäre Funksende-/Funkempfangseinrichtung, welche durch Mittel zur Durchführung des Verfahrens gemäß der Erfindung bzw. der Weiterbildungen gekennzeichnet ist.

Gleiches gilt für die mobile Funksende-/Funkempfangseinrichtung gemäß der Erfindung und/oder den Weiterbildungen.

Die Erfindung hebt sich damit vorteilhaft vom Stand der Technik ab, denn gemäß dem Stand der Technik ist lediglich eine von der stationären Funksende-/Funkempfangseinrichtung (Basisstation) initiierte Abmeldung von mobilen Funksende-/Funkempfangseinrichtungen (Mobilstation) definiert. Hierzu ist im DECT (GAP)-Standard die Prozedur "Terminate access rights FT initiated", wobei mit FT ein so genanntes "Fixed Terminal", also eine Basisstation bezeichnet ist, zwingend in der Basisstation vorgeschrieben und für Mobilteile lediglich als Option vorgesehen, während die Erfindung es ermöglicht, dass allen Mobilteilen eine Abmeldungsprozedur zur Verfügung steht.

Weiterhin ist gemäß DECT oder beispielsweise dem so genannten "DECT Packet Radio Service for data" DPRS für eine vom Mobilteil-initiierte Abmeldung die Prozedur "Terminate access rights PT initiated" definiert (ebenfalls Unterstützung im PT mandatory, in FT optional), wobei mit PT ein so genanntes "Portable Terminal", also eine Mobilstation bezeichnet ist. Diese Prozeduren spezifizieren den Meldungsverkehr zwischen der Basisstation und dem abzumeldenden Mobilteil auf Netzwerk ("Network", NWK)-Ebene.

Durch die Erfindung wird es vorteilhafter Weise im Gegensatz zu DECT ermöglicht, einen Benutzeranreiz zum Abmelden des eigenen, vor allem aber auch eines anderen Mobilteils vom Mobilteil zur Basis zu übermitteln, denn beim aus dem Stand der Technik bekannten DECT kann lediglich das eigene Mobilteil (Mobilstation) mit der Prozedur "Terminate access rights PT initiated" abgemeldet werden.

Ein weiterer Vorteil der Erfindung besteht darin, dass nun eine aus dem Stand der Technik bekannte etwaige proprietäre Signalisierung zwischen einem initiierenden Mobilteil und einer Basisstation nicht mehr erforderlich ist und dessen Nachteile überwunden werden, die darin liegen, dass diese proprietäre Signalisierung bedingt, dass eine Kompatibilität zwischen verschiedenen Herstellern für diese Anwendung nicht möglich ist.

Durch die Erfindung wird es nun möglich Verfahren für den Zugriff des Mobilteils auf Listen in der Basisstation zu unterstützen. Damit wird möglich sein, dass herstellerfremde Mobilteile beispielsweise auf eine so genannte Anrufliste in der Basisstation oder auf ein Basisstation-Telefonbuch zugreifen können.

Neben dem Anzeigen und Editieren von Listeneinträgen wird hierdurch auch das Hinzufügen und Löschen von Listeneinträgen unterstützt. Eine weitere Liste, die über diesen Mechanismus angesehen werden kann, ist die Liste der Internteilnehmer.

Dies ist eine besondere Liste, da neue Einträge nicht einfach hinzugefügt werden können, sondern vielmehr dadurch zustande kommen, dass ein neues Mobilteil angemeldet und dann von der Basisstation in diese Liste eingefügt wird. Dies wird erfindungsgemäß zum Abmelden eines Mobilteils derart genutzt, dass nun das Listenprotokoll verwendet wird, in dem das Löschen eines Listeneintrags aus der Internteilnehmerliste als Abmelden eben dieses Internteilnehmers bewertet wird. Ebenso sieht es die Erfindung alternativ oder ergänzend vor, dass das Einfügen eines neuen Eintrags in diese Liste erlaubt und damit die Prozedur zu verbinden, dass die Basisstation in den Zustand der Anmeldebereitschaft wechselt.

Durch die erfindungsgemäße Weiterbildung, die eine Verknüpfung unterstützten Protokollfunktion "Löschen eines Eintrags aus der Internteilnehmerliste" mit dem Leistungsmerkmal "Abmelden eines Internteilnehmers" vorsieht, wird ein zusätzliches, nützliches Leistungsmerkmal herstellerübergreifend ermöglicht, ohne dass ein neues Protokoll oder neue Protokollelemente definiert werden müssen. Diese Verknüpfung spart sowohl Definitionsaufwand bei der Standardisierung als auch Implementierungsaufwand in den Endgeräten und erhöht gleichzeitig die Kompatibilität zwischen den Herstellern.

Die Erfindung erlaubt auch die Unterstützung von verschiedenste Listen, die in schnurlosen Kommunikationssystemen wie gemäß DECT funktionierenden, dem Benutzer des Systems zugänglich sein müssen, wie beispielsweise Telefonbuch, Wahlwiederholung, Anruferliste und so fort.

Dies wird insbesondere durch die erfindungsgemäße Weiterbildung, die ein Protokoll mit einem generischen Satz von Kommandos (Aktionen) für den Zugriff auf beliebige Listen und deren Listenelemente (Objekte) definiert, erreicht. Die sich zudem wegen ihrer Flexibilität vorteilhaft hervorhebt.

Alternativ oder ergänzend sind dabei die Inhalte der Objekte entkoppelt von den Aktionen, so dass mit einem Kommandosatz sowohl der Zugriff auf beliebige Listen als auch auf beliebige Einträge einer Liste gewährleistet ist.

Neben dem sequentiellen Listenzugriff ermöglicht das erfindungsgemäße Protokoll auch eine gezielte Suche sowie die Navigation durch beliebige Listen.

Vorteilhaft können dabei den Elementen einer Liste Attribute, insbesondere Attribute wie "read", "write", "execute" und weitere, vergeben werden, um zu kennzeichnen, welche Aktionen ausgeführt werden können.

Durch die Entkoppelung ist zudem das Anwendungsfeld des Protokolls auf zukünftige Listen mit noch unbekannten Listenelementen erweitert, ohne dass das Protokoll selbst erweitert werden muss.

Ferner eignet sich die generische Struktur des Protokolls ebenfalls dazu, erfindungsgemäß beispielsweise einen Menübaum zwischen der Basisstation und dem Mobilteil zu übertragen. In so einem Fall kann die Erfindung derart weitergebildet werden, dass der Menübaum einfach als eine weitere, zu bearbeitende Liste implementiert wird und der Zugriff sowie die Navigation durch das Menü über den bereits erwähnten generischen Satz von Kommandos erfolgt.

Ein weiterer alternativer oder ergänzender Einsatz des Protokolls besteht in der Manipulation von Konfigurationsparametern, die in der Basisstation verwaltet werden und über das Mobilteil bearbeitet werden sollen.

Diese Konfigurationsparameter können ergänzend ebenfalls als Liste repräsentiert werden, wobei deren Elemente erfindungsgemäß in der Regel aus zwei Einträgen besteht: Eine (nicht veränderbare) Kennzeichnung des Parameters, sowie der eigentliche (veränderbare) Wert des Parameters.

Das definierte Protokoll kann gemäß der Erfindung auch verwendet werden, um eine Information, welche Listen von einem jeweiligen Kommunikationspartner überhaupt angeboten bzw. unterstützt werden, auszutauschen. Zu diesem Zweck kann eine spezielle "Liste der Listen" verwaltet werden. Die Elemente dieser besonderen Liste geben Aufschluss darüber, welche Liste mit welchen Listenelementen unterstützt wird. Somit kann durch gezieltes Suchen nach dem Listentyp ermittelt werden, ob die gewünschte Liste überhaupt unterstützt wird, und wenn ja, in welchem Umfang.

Die Erfindung ermöglicht wie teilweise bereits erläutert eine Unterstützung eines Zugriffs durch das Mobilteil auf diverse in der Basis verwaltete Listen, wie beispielsweise Liste der Internteilnehmer aber auch Call-Log-Liste oder ein Adressbuch.

Dieses Zugriffsprotokoll ist erfindungsgemäß daher auf Systeme anwendbar und insbesondere hierfür besonders vorteilhaft einsetzbar, die aus Produkten unterschiedlicher Hersteller bestehen. Also Systemen, in denen die einzelnen am System beteiligten Mobilteile und die Basisstation unterschiedliche Listen und in den Listeneinträgen wiederum unterschiedliche Elemente unterstützen.

Denn aus den aus dem Stand der Technik bekannten proprietären Gigaset-Protokollen und auch im DECT-Standard wurden vergleichbare Szenarien überwiegend durch den Austausch von Geräteeigenschaften im Vorfeld der eigentlichen Transaktion gelöst. Die Erfindung bedingt aber im Gegensatz zu diesem Ansatz aber keine komplexe Kommunikation zwischen Basisstation und Mobilteil. Viel größer wird der erfindungsgemäße Vorteil noch bei einer Kombination von Geräten verschiedener Hersteller, da die Anzahl der kombinierbaren Varianten noch erhöht und damit die Komplexität dieses Austauschs noch gesteigert wird.

Verbessert wird dies insbesondere durch eine auf das beschriebene erfindungsgemäße generische Listenzugriffsprotokoll basierende Liste aufbauende Weiterbildung, welche einen gezielten Zugriff auf die einzelnen Elemente eines Listeneintrags bietet sowie einen Request/Reply Mechanismus realisiert, bei dem das Mobilteil die Rolle des Clients übernimmt und die Basis die Rolle des Servers.

Durch die angesprochene Weiterbildung ist eine Verfeinerung hierdurch gegeben, dass das Mobilteil beim Zugriff auf die Liste auch die Elemente eines Listeneintrags, die es zum aktuellen Zeitpunkt unterstützen kann, spezifiziert.

Hierbei bilden bekannte Elemente die Obermenge, die gegebenenfalls durch Restriktionen in den Darstellungsmöglichkeiten, beispielsweise die Anzahl und Art der Elemente eines Eintrags, die aktuell dargestellt werden können, oder aufgrund der verfügbaren Ressourcen, beispielsweise wie viele Elemente eines Eintrags aktuell gespeichert werden können, weiter eingeschränkt werden.

Die Basisstation wiederum beantwortet die Anfrage mit denjenigen der angefragten Elemente, die ihrerseits unterstützt werden.

Das erfindungsgemäße Verfahren verlässt damit den aus dem DECT bisher üblichen Weg des Capability-Austauschs (Terminal Capability, FixedPart-Capability) und definiert ein Protokoll, das sich automatisch an die Eigenschaften der kommunizierenden Partner adaptiert.

Das Verfahren hat zudem den Vorteil, dass die maximal mögliche Kompatibilität zwischen Geräten verschiedener Hersteller oder Leistungsklassen, beispielsweise bezüglich Display oder Speicher, erreicht werden kann, ohne den aufwendigen Austausch der Eigenschaften der Geräte zu erfordern.

Weiterhin können gemäß der Erfindung im Mobilteil Darstellungsformen an die eigenen Ressourcen angepasst werden, wobei dies dank der Weiterbildung erfolgen kann, ohne dass die Basisstation diese kennen muss. Hierzu wird vorteilhafter Weise auf einem Mobilteil, das nur eine Displayzeile unterstützt, im ersten Schritt nur der Name eines Kontaktes dargestellt werden und dann nach entsprechender Interaktion des Benutzers die Rufnummer nachgefragt und dargestellt, wobei die Adresse eventuell aus Speicherplatzgründen gar nicht unterstützt und daher auch nicht nachgefragt wird.

Die Weiterbildung ist dabei so flexibel, dass dagegen ein Mobilteil mit mehrzeiligem Display und besseren Speicherressourcen mit dem erfindungsgemäßen Protokoll den kompletten Eintrag lesen und darstellen kann.

Ein weiterer Vorteil liegt darin, dass sich der Datenverkehr auf der Luftschnittstelle auf das Notwendige beschränkt und Übertragung von nicht unterstützten Elementen vermieden wird. Das Verfahren besitzt ferner eine gute Erweiterbarkeit, da weitere Elemente jederzeit definiert werden können, weil sobald sowohl Basis als auch Mobilteil sie unterstützen, diese auch ausgetauscht werden und andernfalls nicht aber eine Funktion dennoch gewährleistet ist.

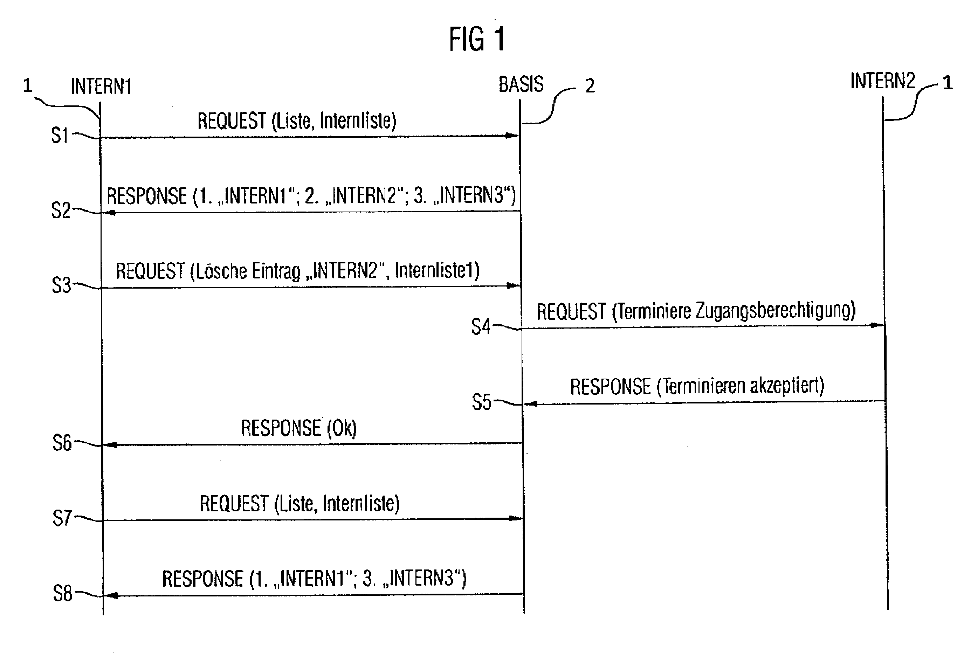

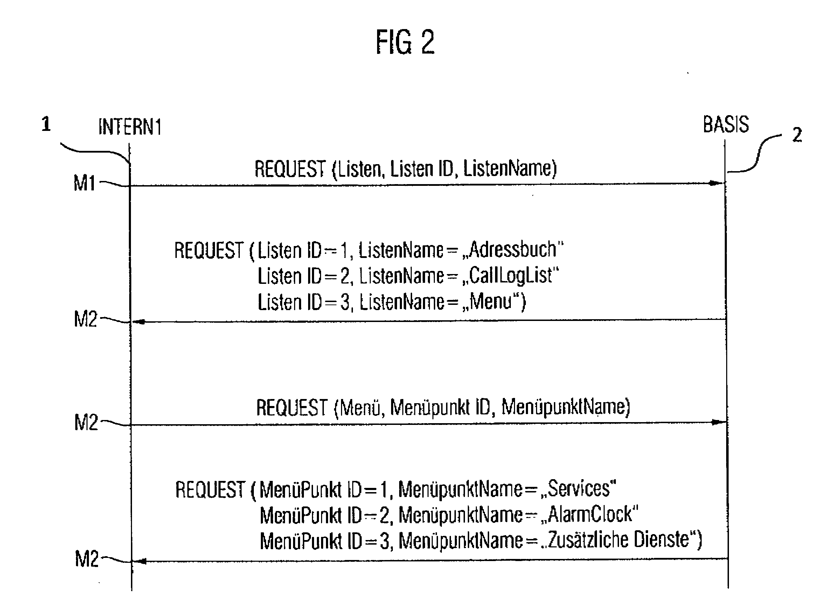

Weitere Einzelheiten Vorteile der Erfindung werden anhand von in den Figuren 1 und 2 dargestellten Ausführungsbeispielen näher erläutert. Dabei zeigt
- Figur 1: ein Ablaufdiagram des insbesondere für DECT Derivate geeigneten Ausführungsbeispiels erfindungsgemäßen Initiierung einer Mobilteilabmeldung,
- Figur 2: ein Ablaufdiagram bei Einsatz eines der erfindungsgemäßen Protokolle

In der Figur 1 ist der ein Ablaufdiagram eines Ausführungsbeispiels des Erfindungsgemäßen Verfahrens für eine erfindungsgemäße Behandlung von Listen dargestellt. Für diese Behandlung ist im Folgenden ein Beispiel für eine erfindungsgemäße Definition der Protokollnachrichten erläutert, welche dem in der Figur 1 dargestellten Ablauf zugrunde liegen.

### 1. Strukutur eines Informationselements:

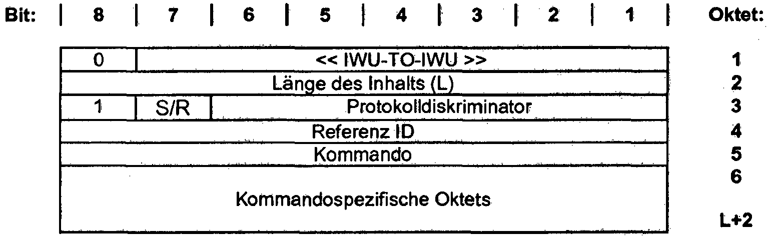

Protokolldiskriminator = 0 0 0 0 1 1 = NG DECT Teil 3, Listentransfer.

S/R Bit = 1 = Übertragung der Nachricht.

Die Referenz ID ist dabei eine eindeutige Identifikation der Transaktion bestehend aus einer Anforderungsnachricht und einer oder mehreren Antwortnachrichten.

### Kommando (Oktet 5):

| **Bits** | **8** | **7** | **6** | **5** | **4** | **3** | **2** | **1** | **Bedeutung** |
|---|---|---|---|---|---|---|---|---|---|
| | 0 | 0 | 0 | 0 | 0 | 0 | 0 | 0 | NACK |
| | 0 | 0 | 0 | 0 | 0 | 0 | 0 | 1 | ACK |
| | 0 | 0 | 0 | 0 | 0 | 0 | 1 | 0 | DATA PACKET |
| | 0 | 0 | 0 | 0 | 0 | 0 | 1 | 1 | LAST DATA PACKET |
| | 0 | 0 | 0 | 0 | 0 | 1 | 0 | 0 | READ ENTRY |
| | 0 | 0 | 0 | 0 | 0 | 1 | 0 | 1 | DELETE ENTRY |
| | 0 | 0 | 0 | 0 | 0 | 1 | 1 | 0 | EDIT ENTRY |
| | 0 | 0 | 0 | 0 | 0 | 1 | 1 | 1 | CREATE ENTRY |
| | 0 | 0 | 0 | 0 | 1 | 0 | 0 | 0 | SAVE ENTRY |
| | 0 | 0 | 0 | 0 | 1 | 0 | 0 | 1 | DELETE LIST |
| | 1 | x | x | x | x | x | x | x | proprietäre Kommandos |

### 2. Kommandos und kommandospezifische Inhalte

### 2.1 Kommando ACK

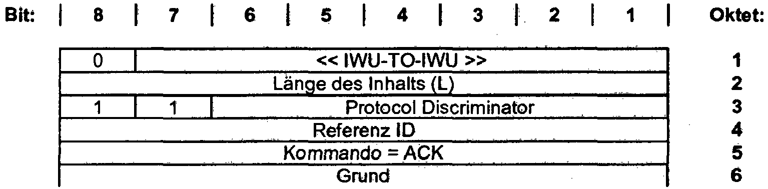

Grund (Oktet 6) :

| **Bits** | **8** | **7** | **6** | **5** | **4** | **3** | **2** | **1** | **Bedeutung** |
|---|---|---|---|---|---|---|---|---|---|
| | 0 | 0 | 0 | 0 | 0 | 0 | 0 | 0 | positive Bestätigung |
| | | | | | | | | | negative Bestätigung: |
| | 0 | 0 | 0 | 0 | 0 | 0 | 0 | 1 | Liste nicht verfügbar |
| | 0 | 0 | 0 | 0 | 0 | 0 | 1 | 0 | Liste leer |
| | 0 | 0 | 0 | 0 | 0 | 0 | 1 | 1 | Eintrag gesperrt |
| | 0 | 0 | 0 | 0 | 0 | 1 | 0 | 0 | Kommando nicht unterstützt |
| | andere Werte reserviert | | | | | | | | |

### 2.3 Kommando DATA PACKET

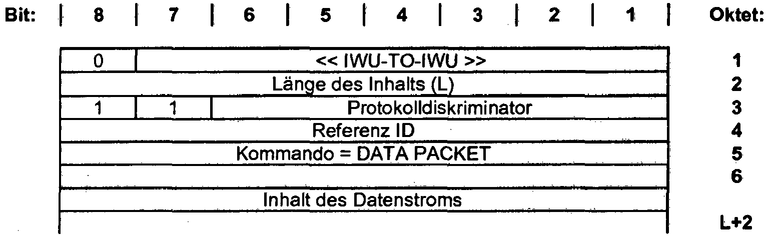

Inhalte des Datenstroms haben die folgende Struktur und können in eine Vielzahl von Datenpaketen (DATA PACKETS) segmentiert sein:

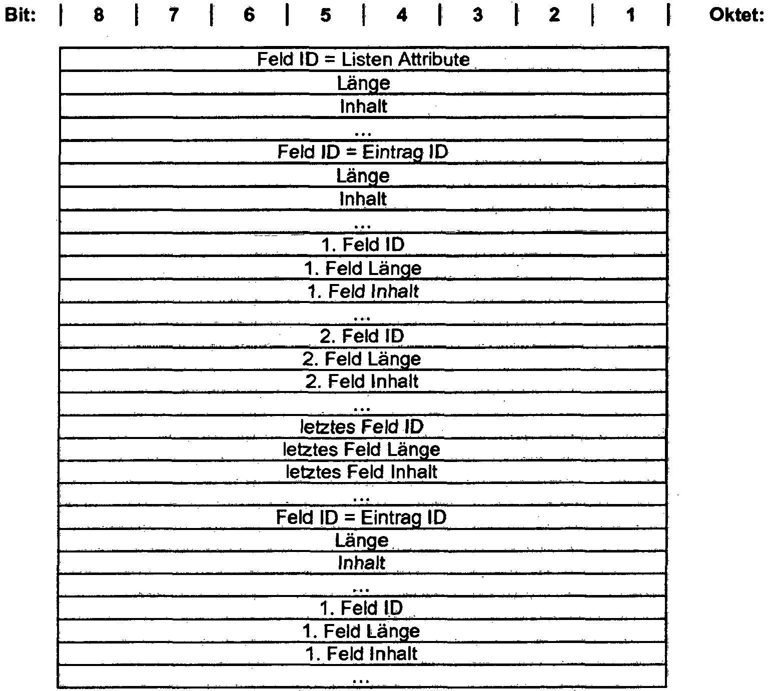

### 2.4 Kommando LAST DATA PACKET

Das Datenpaket, welches das letzte Oktet des Datenstroms enthält, soll die Codierung "LAST DATA PACKET" im Oktet 5 des IE «IWU-TO-IWU» aufweisen.

Davon abgesehen entspricht die Struktur der Struktur von DATA PACKET.

### 2.5 Kommando SEARCH ENTRY

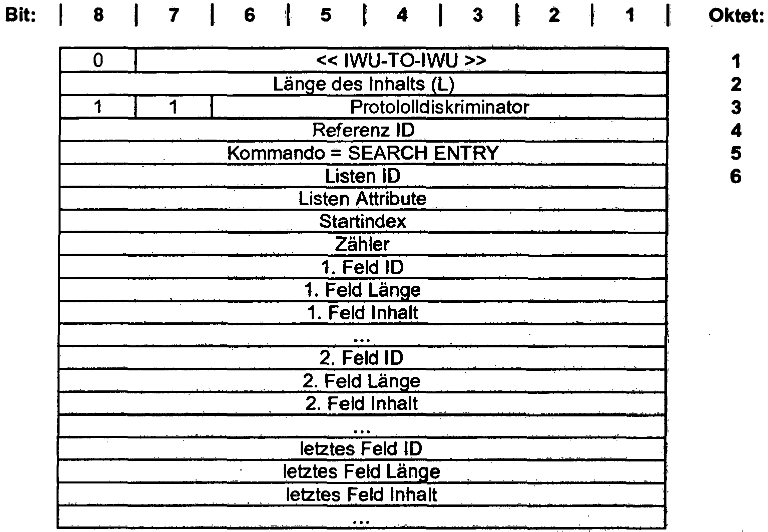

### 2.5 Kommando READ ENTRY

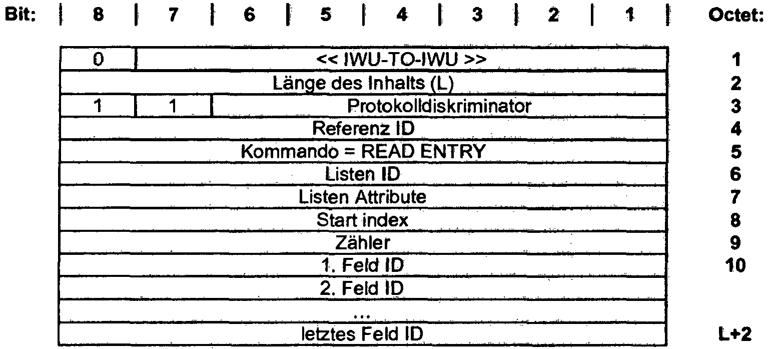

Listenindex (Oktet 7) :

| **Bits** | **8** | **7** | **6** | **5** | **4** | **3** | **2** | **1** | **Bedeutung** |
|---|---|---|---|---|---|---|---|---|---|
| | 1 | 1 | 1 | 1 | 1 | 1 | 1 | 1 | letzter Eintrag |
| | andere Werte | | | | | | | | Listeneintrag |

Listenattribute (Oktet):

| **Bits** | **8** | **7** | **6** | **5** | **4** | **3** | **2** | **1** | **Bedeutung** |
|---|---|---|---|---|---|---|---|---|---|
| | x | x | x | x | x | x | x | 1 | Gesamtzahl der Einträge |
| | andere Werte | | | | | | | | reserviert |

Zähler (Oktet):

| **Bits** | **8** | **7** | **6** | **5** | **4** | **3** | **2** | **1** | **Bedeutung** |
|---|---|---|---|---|---|---|---|---|---|
| | 0 | x | x | x | x | x | x | x | vorwärts |
| | 1 | x | x | x | x | x | x | x | rückwärts |

### 2.6 Kommando DELETE ENTRY

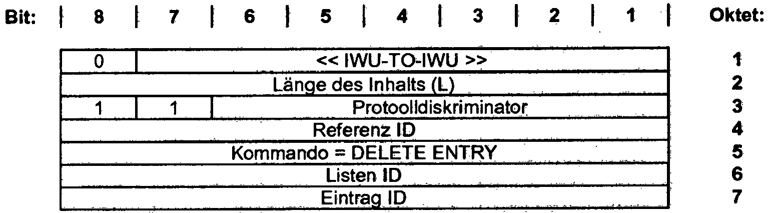

### 2.7 Kommando EDIT ENTRY

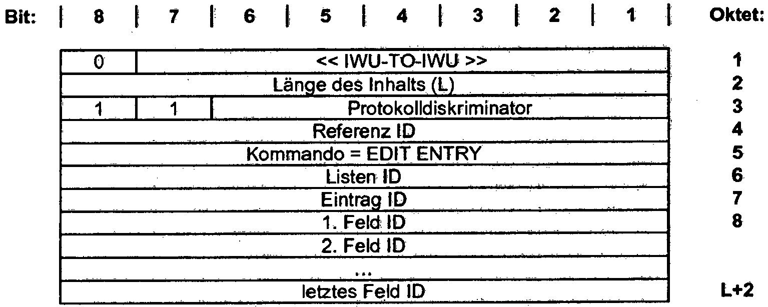

### 2.8 Kommando CREATE ENTRY

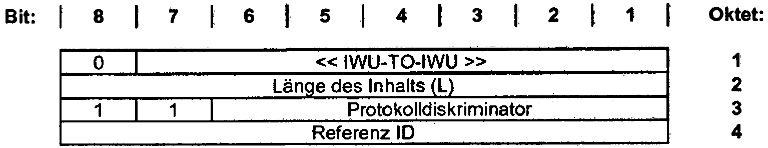

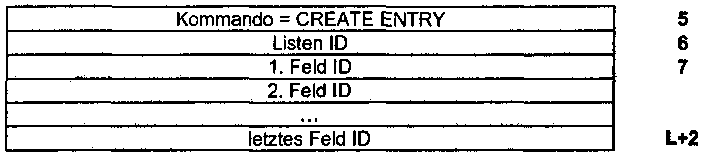

### 2.9 Kommando SAVE ENTRY

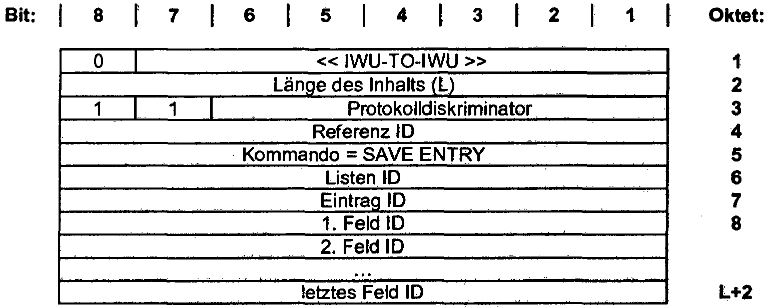

### 2.10 Kommando DELETE LIST

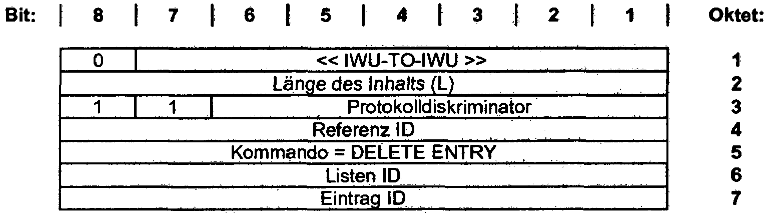

### 2.11 Proprietäre Kommandos

Falls vorhanden, zeigt Oktet 5 proprietären Inhalt an:

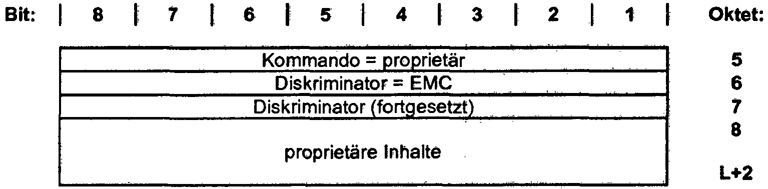

### 3. Listen ID

Die folgenden Listen sind definiert:
**Listen ID:**

| **Bits** | **8** | **7** | **6** | **5** | **4** | **3** | **2** | **1** | **Bedeutung** |
|---|---|---|---|---|---|---|---|---|---|
| | 0 | 0 | 0 | 0 | 0 | 0 | 0 | 0 | privates Adressbuch |
| | 0 | 0 | 0 | 0 | 0 | 0 | 0 | 1 | globales Adressbuch |
| | 0 | 0 | 0 | 0 | 0 | 0 | 1 | 0 | interne Liste |
| | 0 | 0 | 0 | 0 | 0 | 0 | 1 | 1 | Liste ausgehender Anrufe |
| | 0 | 0 | 0 | 0 | 0 | 1 | 0 | 0 | Liste angenommener Anrufe |
| | 0 | 0 | 0 | 0 | 0 | 1 | 0 | 1 | Liste versäumter Anrufe |
| | 0 | 0 | 0 | 0 | 0 | 1 | 1 | 0 | Listen ID Liste |
| | 1 | x | x | x | x | x | x | x | proprietäre Listen |

Kommandos spezifischer Inhalte sind im Folgenden beschrieben:

### 4. Matrix von Listen zu vorgeschriebenen Feldern

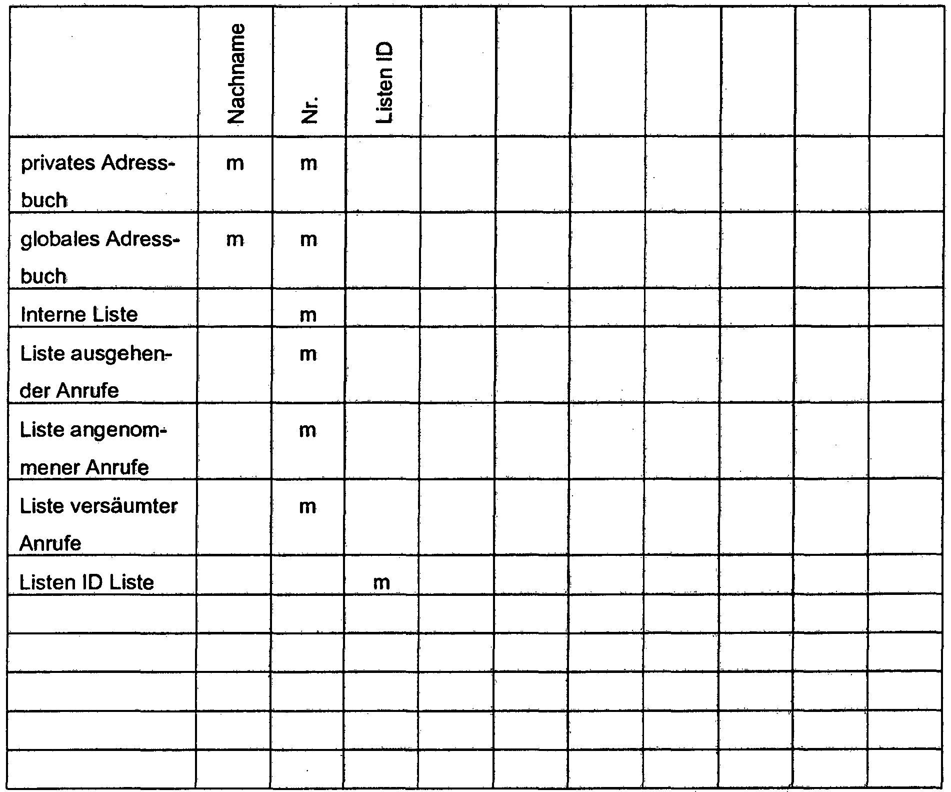

### 5. Feld ID

Felder sollten die folgende Struktur aufweisen, falls das 8. und 7. Bit im ersten Oktet nicht gesetzt sind:

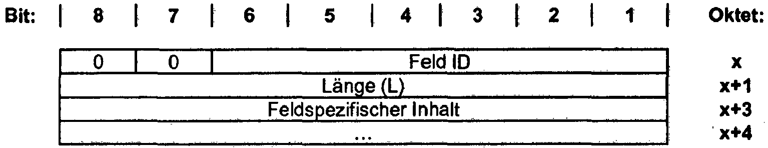

Falls das Feld nur ein Oktet an Inhalt enthält, wird das Feld mit der Länge (L) ausgelassen und Bit 8 des 1. Oktets wird auf "0" und Bit 7 auf "1" gesetzt:

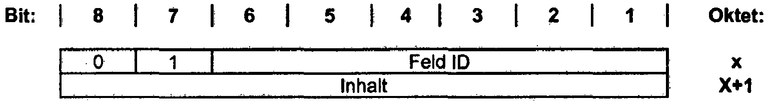

Falls das Feld zwei Oktets an Inhalt enthält, wird das Feld mit der Länge (L) ausgelassen und Bit 8 des 1. Oktets wird auf "1" und Bit 7 auf "0" gesetzt:

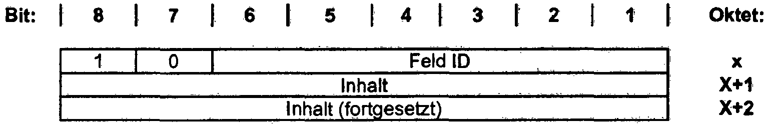

Das folgende Feld ID ist definiert:
**Feld ID:**

| **Bits** | **6** | **5** | **4** | **3** | **2** | **1** | **Bedeutung** |
|---|---|---|---|---|---|---|---|
| | 0 | 0 | 0 | 0 | 0 | 0 | Eintrag ID |
| | 0 | 0 | 0 | 0 | 0 | 1 | Listen Attribute |
| | 0 | 0 | 0 | 0 | 1 | 0 | - |
| | 0 | 0 | 0 | 0 | 1 | 1 | Listenindex |
| | 0 | 0 | 0 | 1 | 0 | 0 | Listen ID |
| | 0 | 0 | 0 | 1 | 0 | 1 | Nr. |
| | 0 | 0 | 0 | 1 | 1 | 0 | Vorname |
| | 0 | 0 | 0 | 1 | 1 | 1 | Nachname |
| | 0 | 0 | 1 | 0 | 0 | 0 | Stadt |
| | 0 | 0 | 1 | 0 | 0 | 1 | Postleitzahl |
| | 0 | 0 | 1 | 0 | 1 | 0 | Straße |
| | 0 | 0 | 1 | 0 | 1 | 1 | Hausnr. |
| | 0 | 0 | 1 | 1 | 0 | 0 | Land |
| | 0 | 0 | 1 | 1 | 0 | 1 | Geburtstag |
| | 0 | 0 | 1 | 1 | 1 | 0 | Zeitpunkt |
| | 0 | 0 | 1 | 1 | 1 | 1 | Spitzname |
| | 0 | 1 | 0 | 0 | 0 | 0 | Nachrichtenstatus |
| | 1 | x | x | x | x | x | proprietäre Felder |

### 5.1 Feld 'ID Eintrag'

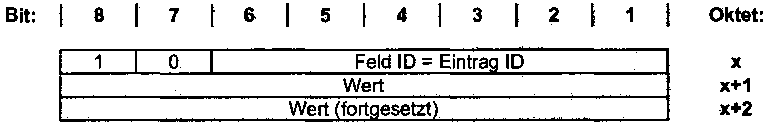

Die Eintrag ID ist eine systemweite eindeutige Identifikation eines Listenelements, welche von der Basisstation vergeben wird.

### 5.2 Feld 'Listen Attribute'

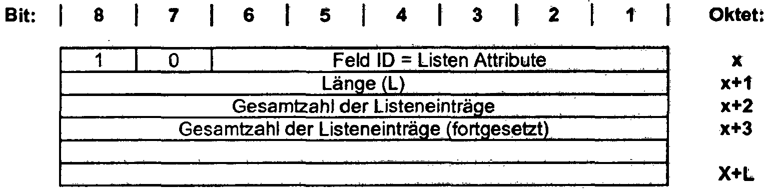

### 5.3 Feld 'Listenindex'

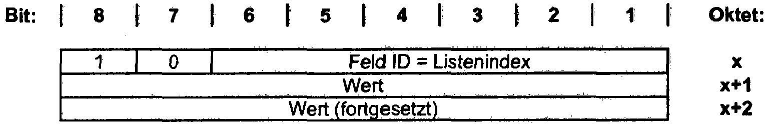

### 5.4 Feld 'Listen ID'

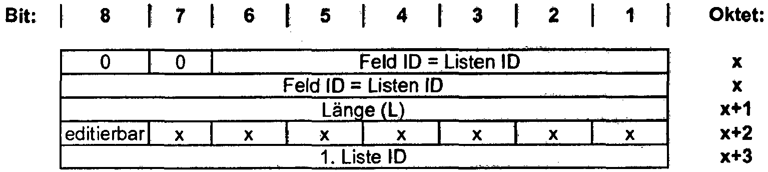

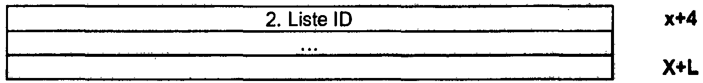

### 5.5 Felder 'Nr.' / 'Postleitzahl' / 'Hausnr.'

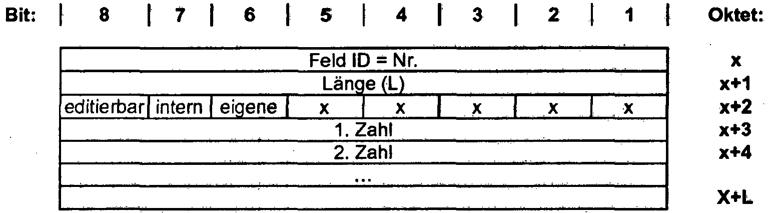

### 5.6 Felder 'Vorname' / 'Nachname' / 'Spitzname' / 'Stadt' / 'Straße' / 'Land'

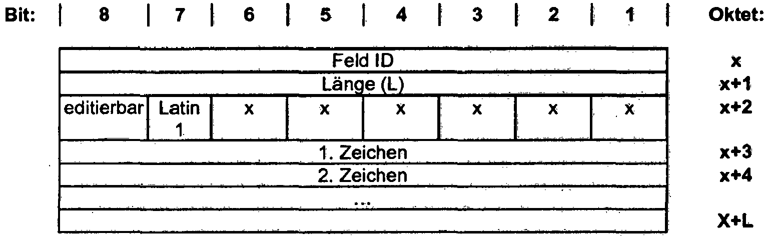

### 5.7 Felder 'Zeitpunkt' / 'Geburtstag'

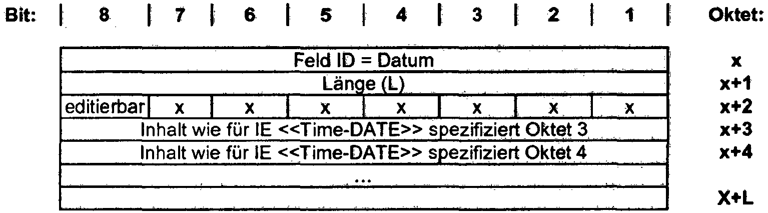

Oktets x+3 und die Folgenden sind wie für Oktet 3 und die Folgenden in IE <<Time-Date>> (EN 300 175-5) beschrieben.

Nur die Interpretation der Kodierung 000000 (=current time/date) ist erlaubt.

### 5.8 Feld 'Nachrichtenstatus'

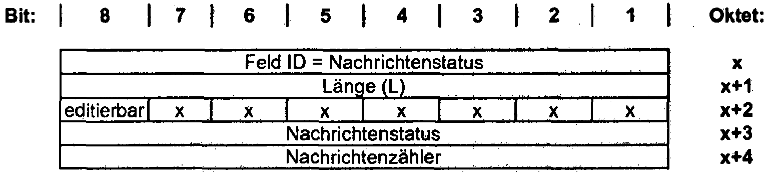

### 5.9 Proprietäre Felder

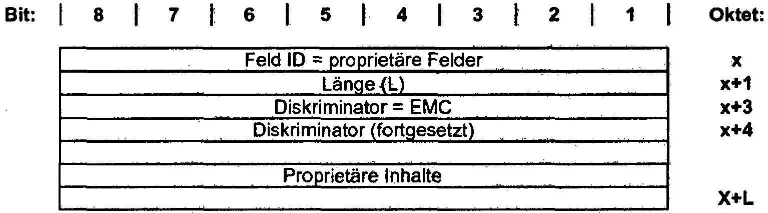

Unter Nutzung zumindest eines Teils der erläuterten Protokollelemente und -nachrichten wird bei dem in Figur 1 dargestellten Ausführungsbeispiel in einem ersten Schritt S1 von einem ersten an einer erfindungsgemäßen Basisstation BASIS angemeldeten Mobilstation INTERN1 eine Anfrage REQUEST an die Basisstation BASIS abgesetzt, welche die Parameter "Liste" und "Internliste" enthält, womit es das Auslesen der Liste "Internliste" seitens der Basisstation BASIS auslöst.

Im Anschluss hieran werden dann in einem zweiten Schritt S2 mit einer von der Basisstation BASIS an das erste angemeldete Mobilteil INTERN1 eine Antwortnachricht RESPONSE abgesetzt, welches als Parameter die Bezeichnungen der angemeldeten Mobilteile, im Beispiel mit "INTERN1", "INTERN2" und "INTERN3" benannt, zurückliefert.

In einem dritten Schritt kommt nun das Initiieren eines Abmeldens einer zweiten angemeldeten Mobilstation INTERN2 durch die erste angemeldete Mobilstation INTERN1, wie es die Erfindung vorsieht. Dies erfolgt bei dem dargestellten Beispiel durch eine weitere Anfrage REQUEST, welche in einem dritten Schritt S3 erfolgt und als Parameter das Kommando "Lösche Eintrag" (oder auch "DELETE ENTRY" bezeichnet) sowie den Kommandoparametern, welche die Liste ("Internliste") und den zu löschenden Eintrag ("INTERN2") spezifizieren, enthält.

Als Reaktion auf diese Anfrage wird erfindungsgemäß nun seitens der Basisstation BASIS eine für dieses Beispiel auf DECT beruhend bzw. für ein DECT Derivat definierte Abmeldeprozedur gestartet, die in einem vierten Schritt S4 an das zweite angemeldete Mobilteil INTERN2 eine Anforderung REQUEST zum Terminieren der Zugangsberechtigung (auch als "Access Rights", "Terminate Request" spezifiziert) übermittelt. Woraufhin die zweite angemeldete Mobilstation INTERN2 in einem fünften Schritt S5 eine Antwortnachricht RESPONSE an die Basisstation BASIS übermittelt, welche das Akzeptieren des Terminierens als Nachricht enthält (auch mit "Acess Rights", "Terminate Accepted" bezeichenbar).

Die Basisstation BASIS meldet nun in einem sechsten Schritt S6 im Rahmen einer Antwortnachricht RESPONSE der ersten angemeldeten Mobilstation INTERN1 das die von Ihr angestoßene Abmeldung der zweiten angemeldeten Mobilstation INTERN 1 erfolgreich ("Ok") abgeschlossen worden ist.

Erfindungsgemäß führt dies zu einem Löschen der zweiten Mobilstation INTERN2 aus der Liste der Internteilnehmer, was gemäß dem gewählten Beispiel von der ersten angemeldeten Mobilstation in einem siebten Schritt S7 durch eine Anfrage nach dem Listeninhalt und in einem achten Schritt S8 überprüft werden soll und letztendlich durch die Rückmeldung lediglich der ersten angemeldeten und einer dritten angemeldeten Station INTERN1, INTERN3 bestätigt wird.

In dem in der Figur 2 dargestellten Beispiel, welches beispielsweise das in Figur 1 beschriebene Beispiel weiterbildet und somit auch auf die beschriebenen Protokollnachrichten und -elemente basieren kann, ist ein Ablaufdiagramm dargestellt, bei dem in einem ersten Schritt M1 ein angemeldetes Mobilteil, beispielsweise das erste angemeldete Mobilteil INTERN1, die Felder einer in der Basisstation BASIS gespeicherten Liste, in welcher die in der Basisstation verfügbaren Listen in organisierter Forma gespeichert sind - die "Liste der Listen", an. Im konkreten Beispiel erfolgt dies mit einer Anfrage REQUEST, die als Parameter angibt, dass es sich um eine Abfrage der Listen handelt, sowie den weiteren Kommandoparametern Listen ID und ListenName.

Hierauf erfolgt in einem zweiten Schritt M2 die Übermittlung einer als Antwortnachricht REPLY gestaltete Nachricht an die erste angemeldete Mobilstation INTERN1, die die verfügbaren Listen angibt.

In einem dritten Schritt M3 kann das erste angemeldete Mobilteil nun die Menüeinträge, des an dieser Basisstation BASIS einsetzbaren - von der Basisstation durch die Liste "Menü" vorgegebenen - mit einer Anfrage REQUEST anfordern.

Diese werden im Anschluss in einem vierten Schritt M4 von der Basisstation BASIS mittels einer Antwortnachricht REPLY derart zurückgeliefert, dass jeder Menüeintrag und der Name des Menüeintrags zurückgeliefert wird, so dass die erste angemeldete Mobilstation INTERN1 die komplette Menüstruktur, die mit der Basisstation BASIS genutzt werden kann, in Kenntnis gesetzt wird.

## Patentansprüche

1. Verfahren zum Betreiben von zumindest einer gemäß einem Schnurlostelekommunikationsstandard, insbesondere einem DECT Derivat, funktionierenden mobilen Funksende-/Funkempfangseinrichtung (1) an einer gemäß dem Schnurlostelekommunikationsstandard funktionierenden stationären Funksende-/Funkempfangseinrichtung (2), bei dem seitens zumindest einer der Funksende-/Funkempfangseinrichtungen (1), (2), insbesondere der Stationären (2), zumindest eine Liste gespeichert wird, bei der seitens der mobilen Fundsende-/Funkempfangseinrichtung (1) zumindest eine die Liste betreffende Protokollnachricht (S3) derart gebildet und an die stationäre Funksende-/Funkempfangseinrichtung (2) übertragen wird, dass die mobile Funksende-/Funkempfangseinrichtung (1) zumindest Teile der Liste betreffende Zugriffe durch die stationäre Funksende-/Funkempfangseinrichtung (2) manipuliert, **dadurch gekennzeichnet, dass** die Protokollnachricht (S3) ferner derart gebildet wird, dass seitens der stationären Funksende-/Funkempfangseinrichtung (2) nur Elemente der Liste ausgelesen und an die mobile Funksende-/Funkempfangseinrichtung (1) übertragen werden, die seitens der mobilen Funksende-/Funkempfangseinrichtung (1) verarbeitbar sind, wobei bei einer Ermittlung der verarbeitbarkeit die Darstellungsmöglichkeiten der mobilen Funksende-/Funkempfangseinrichtung (1), insbesondere Eigenschaften des Displays, zugrunde gelegt werden.

2. Verfahren nach dem Anspruch 1, **dadurch gekennzeichnet, dass** einer Ermittlung der Verarbeitbarkeit die der mobilen Funksende-/Funkempfangseinrichtung (1) verfügbaren Ressourcen zugrunde gelegt werden.

3. Verfahren nach einem der vorhergehenden Ansprüche, **dadurch gekennzeichnet, dass**
a) die stationäre Funksende-/Funkempfangseinrichtung (2) bei ihr angemeldete mobile Funkesende-/Funkempfangseinrichtungen (1) als Elemente einer Liste führt,
b) durch die mobile Funksende-/Funkempfangseinrichtung (1) die Protokollnachricht (S3) derart gebildet wird, dass
b1) die mobile Funksende-/Funkempfangseinrichtung (1) zumindest eine der angemeldeten mobilen Funksende-/Funkempfangseinrichtungen (1) spezifiziert, deren Eintrag aus der Liste gelöscht werden soll,
b2) die stationäre Funksende-/Funkempfangseinrichtung (2) bei Empfang der Protokollnachricht (S3) den jeweiligen Eintrag löscht und für die zugehörige mobile Funksende-/Funkempfangseinrichtung (1) eine Abmeldeprozedur startet.

4. Verfahren nach einem der vorhergehenden Ansprüche, **dadurch gekennzeichnet, dass**
a) die stationäre Funksende-/Funkempfangseinrichtung (2) bei ihr angemeldete mobile Funkesende-/Funkempfangseinrichtungen (1) als Elemente einer Liste führt,
b) durch die mobile Funksende-/Funkempfangseinrichtung (1) die Protokollnachricht (S3) derart gebildet wird, dass
b1) die mobile Funksende-/Funkempfangseinrichtung (1) zumindest eine nicht angemeldete mobile Funksende-/Funkempfangseinrichtungen (1) spezifiziert, deren Element in die Liste eingetragen werden soll,
b2) die stationäre Funksende-/Funkempfangseinrichtung (2) bei Empfang der Protokollnachricht (S3) das jeweilige Element einträgt und für die zugehörige mobile Funksende-/Funkempfangseinrichtung (1) eine Anmeldeprozedur startet.

5. verfahren nach einem der vorhergehenden Ansprüche, **dadurch gekennzeichnet, dass** die Protokollnachrichten (S3) derart gebildet werden, dass sie einem Protokoll folgen, welches eine Trennung von Objekten und Aktionen vorsieht.

6. Verfahren nach einem der vorhergehenden Ansprüche, **dadurch gekennzeichnet, dass** die Protokollnachrichten (S3) derart gebildet werden, dass sie einem Protokoll folgen, welches derart strukturiert wird, dass die stationäre Funksende-/Funkempfangseinrichtung (2) der mobilen Funksende-/Funkempfangseinrichtung (1) eine auf der mobilen Funksende-/Funkempfangseinrichtung (1) darzustellende durch die stationäre Funksende-/Funkempfangseinrichtung (2) unterstützte Menüstruktur übermittelt.

7. Verfahren nach dem vorhergehenden Anspruch, **dadurch gekennzeichnet, dass** das Protokoll generisch strukturiert wird.

8. Verfahren nach dem vorhergehenden Anspruch, **dadurch gekennzeichnet, dass** das Protokoll derart generisch strukturiert wird, dass die Menüstruktur als eine Liste hinterlegt und/oder behandelt wird.

9. Verfahren nach einem der vorhergehenden Ansprüche, **dadurch gekennzeichnet, dass** die Liste derart gebildet wird, dass als Elemente Konfigurationsparameter derart organisiert gespeichert sind, dass sie zumindest als einen ersten Eintrag eine, insbesondere unveränderbare, Parameterkennzeichnung und als einen zweiten Eintrag einen manipulierbaren Wert des Parameters enthalten.

10. Verfahren nach einem der vorhergehenden Ansprüche, **dadurch gekennzeichnet, dass** die Liste derart gebildet wird, dass sie als Anruferliste, Liste zur Wahlwiederholung, Telefonbuchliste und/oder Liste über die verfügbaren Listen verwendet wird.

11. Stationäre Funksende-/Funkempfangseinrichtung **gekennzeichnet durch** Mittel zur Durchführung des Verfahrens nach einem der vorhergehenden Ansprüche.

12. Mobile Funksende-/Funkempfangseinrichtung **gekennzeichnet durch** Mittel zur Durchführung des Verfahrens nach einen der Ansprüche 1 bis 10.

## Claims

1. A method for operating at least one mobile radio transmission/radio receiving device (1) operating according to a wireless telecommunication standard, in particular a DECT derivative, on a stationary radio transmission/radio receiving device (2) operating according to the wireless telecommunication standard, in which at least one of the radio transmission/radio receiving devices (1), (2), in particular the stationary radio transmission/radio receiving device (2), stores at least one list, wherein at least one protocol notification (S3) relating to the list is generated by the mobile radio transmission/radio receiving device (1) and is transmitted to the stationary radio transmission/radio receiving device (2) such that the mobile radio transmission/radio receiving device (1) manipulates at least parts of the accesses related to the list by means of the stationary radio transmission/radio receiving device (2), **characterized in that** the protocol notification (S3) is furthermore formed such that the stationary radio transmission/radio receiving device (2) only reads out elements of the list and sends said elements to the mobile radio transmission/radio receiving device (1) that can be processed by the mobile radio transmission/radio receiving device (1), wherein the presentation possibilities of the mobile radio transmission/radio receiving device (1), in particular properties of the display, are taken into account in a determination of the processability.

2. The method according to claim 1, **characterized in that** the resources that are available to the mobile radio transmission/radio receiving device (1) are taken into account in a determination of the processability.

3. The method according to any one of the preceding claims, **characterized in that**
a) the stationary radio transmission/radio receiving device (2) maintains mobile radio transmission/radio receiving devices (1) logged on thereto as elements of a list,
b) the protocol notification (S3) is formed by the mobile radio transmission/radio receiving device (1) such that
b1) the mobile radio transmission/radio receiving device (1) specifies at least one of the logged-on mobile radio transmission/radio receiving devices (1), the entry of which should be deleted from the list,
b2) the stationary radio transmission/radio receiving device (2), upon receipt of the protocol notification (S3), deletes the particular entry and starts a logoff procedure for the associated mobile radio transmission/radio receiving device (1).

4. The method according to any one of the preceding claims, **characterized in that**
a) the stationary radio transmission/radio receiving device (2) maintains mobile radio transmission/radio receiving devices (1) logged on thereto as elements of a list,
b) the protocol notification (S3) is formed by the mobile radio transmission/radio receiving device (1) such that
b1) the mobile radio transmission/radio receiving device (1) specifies at least one mobile radio transmission/radio receiving device (1) that is not logged on, the element of which should be entered in the list,
b2) the stationary radio transmission/radio receiving device (2), upon receipt of the protocol notification (S3), enters the particular element and starts a logon procedure for the associated mobile radio transmission/radio receiving device (1).

5. The method according to any one of the preceding claims, **characterized in that** the protocol notifications (S3) are formed such that these follow a protocol, according to which objects and actions are separated.

6. The method according to any one of the preceding claims, **characterized in that** the protocol notifications (S3) are formed such that these follow a protocol, which is structured such that the stationary radio transmission/radio receiving device (2) transmits, to the mobile radio transmission/radio receiving device (1), a menu structure, which is supported by the stationary radio transmission/radio receiving device (2) and is intended to be displayed on the mobile radio transmission/radio receiving device (1).

7. The method according to the preceding claim, **characterized in that** the protocol is generically structured.

8. The method according to the preceding claim, **characterized in that** the protocol is generically structured such that the menu structure is stored and/or handled as a list.

9. The method according to any one of the preceding claims, **characterized in that** the list is formed such that configuration parameters, as elements, are stored so as to be organized such that these contain at least one parameter identifier, which cannot be changed, in particular, as a first entry, and a manipulatable value of the parameter, as a second entry.

10. The method according to any one of the preceding claims, **characterized in that** the list is formed such that said list is used as a caller list, a list for re-dialing, a telephone book list, and/or a list of the available lists.

11. A stationary radio transmission/radio receiving device **characterized by** means for carrying out the method according to any one of the preceding claims.

12. A mobile radio transmission/radio receiving device **characterized by** means for carrying out the method according to any one of claims 1 to 10.

## Revendications

1. Procédé pour le fonctionnement d'au moins un dispositif émetteur/récepteur radio mobile (1) fonctionnant selon une norme de télécommunication sans fil, en particulier un dérivé DECT, sur un dispositif émetteur/récepteur radio fixe (2) fonctionnant selon la norme de télécommunication sans fil, dans lequel au moins une liste est enregistrée du côté d'au moins l'un des dispositifs émetteur/récepteur radio (1), (2), en particulier le fixe (2), dans lequel un message de protocole (S3) concernant la liste est formé du côté du dispositif émetteur/récepteur radio mobile (1) et transmis au dispositif émetteur/récepteur radio fixe (2), de telle façon que le dispositif émetteur/récepteur radio mobile (1) traite des accès concernant au moins des parties de la liste, par le biais du dispositif émetteur/récepteur radio fixe (2), **caractérisé en ce que** le message de protocole (S3) est en outre formé de façon à ce que du côté du dispositif émetteur/récepteur radio fixe (2), seuls des éléments de la liste pouvant être traités du côté du dispositif émetteur/récepteur radio mobile (1) sont lus et transmis au dispositif émetteur/récepteur radio mobile (1), sachant que la détermination de l'aptitude au traitement se base sur les possibilités de représentation du dispositif émetteur/récepteur radio mobile (1), en particulier sur les propriétés de l'affichage.

2. Procédé selon la revendication 1, **caractérisé en ce que** la détermination de l'aptitude au traitement se base sur les ressources disponibles pour le dispositif émetteur/récepteur radio mobile (1).

3. Procédé selon l'une des revendications précédentes, **caractérisé en ce que**
a) le dispositif émetteur/récepteur radio fixe (2) dirige des dispositifs émetteur/récepteur radio mobiles (1) inscrits auprès de celui-ci, en tant qu'éléments d'une liste,
b) le message de protocole (S3) est formé de telle façon par le dispositif émetteur/récepteur radio mobile (1), que b1) le dispositif émetteur/récepteur radio mobile (1) spécifie au moins l'un des dispositifs émetteur/récepteur radio mobiles (1) inscrits dont l'entrée doit être effacée de la liste,
b2) lors de la réception du message de protocole (S3), le dispositif émetteur/récepteur radio fixe (2) efface l'entrée respective et une procédure de désinscription est amorcée pour le dispositif émetteur/récepteur radio mobile (1) correspondant.

4. Procédé selon l'une des revendications précédentes, **caractérisé en ce que**
a) le dispositif émetteur/récepteur radio fixe (2) dirige des dispositifs émetteur/récepteur radio mobiles (1) inscrits auprès de celui-ci, en tant qu'éléments d'une liste,
b) le message de protocole (S3) est formé de telle façon par le dispositif émetteur/récepteur radio mobile (1), que
b1) le dispositif émetteur/récepteur radio mobile (1) spécifie au moins un dispositif émetteur/récepteur radio mobile (1) non-inscrits, dont l'élément doit être enregistré dans la liste,
b2) lors de la réception du message de protocole (S3), le dispositif émetteur/récepteur radio fixe (2) enregistre l'élément respectif et une procédure d'inscription est amorcée pour le dispositif émetteur/récepteur radio mobile (1) correspondant.

5. Procédé selon l'une des revendications précédentes, **caractérisé en ce que** les messages de protocole (S3) sont formés de façon à suivre un protocole prévoyant une séparation d'objets et d'actions.

6. Procédé selon l'une des revendications précédentes, **caractérisé en ce que** les messages de protocole (S3) sont formés de façon à suivre un protocole structuré de manière à ce que le dispositif émetteur/récepteur radio fixe (2) transmet au dispositif émetteur/récepteur radio mobile (1) une structure de menu supportée par le dispositif émetteur/récepteur radio fixe (2), destinée à être représentée sur le dispositif émetteur/récepteur radio mobile (1).

7. Procédé selon la revendication précédente, **caractérisé en ce que** le protocole est structuré de façon générique.

8. Procédé selon la revendication précédente, **caractérisé en ce que** le protocole est structuré de façon générique, de telle manière que la structure de menu est transmise et/ou traitée en tant que liste.

9. Procédé selon l'une des revendications précédentes, **caractérisé en ce que** la liste est formée de façon à ce que des paramètres de configuration sont enregistrés en tant qu'éléments, organisés de manière à contenir au moins un identifiant de paramètre, en particulier non-modifiable, en tant que première entrée, et une valeur variable du paramètre en tant que deuxième entrée.

10. Procédé selon l'une des revendications précédentes, **caractérisé en ce que** la liste est formée de manière à être utilisée comme liste d'appelants, liste de renumérotation, liste de répertoire et/ou liste des listes disponibles.

11. Dispositif émetteur/récepteur radio fixe **caractérisé par** des moyens pour l'exécution du procédé selon l'une des revendications précédentes.

12. Dispositif émetteur/récepteur radio mobile **caractérisé par** des moyens pour l'exécution du procédé selon l'une des revendications 1 à 10.
